# EUROPEAN PATENT SPECIFICATION

(11) **EP 2 568 698 B1**
(45) Date of publication and mention of the grant of the patent: **10.07.2019**
(21) Application number: 12183344.6
(22) Date of filing: 06.09.2012
(51) Int. Cl.: H04N 5/232, H04N 5/14

(54) **Imaging apparatus and control method thereof**
Abbildungsvorrichtung und Steuerverfahren dafür
Appareil d'imagerie et son procédé de contrôle

(30) Priority: 07.09.2011 JP 2011195108
(43) Date of publication of application: 13.03.2013
(73) Proprietor: Ricoh Company, Ltd., Tokyo 143-8555 (JP)
(72) Inventor: Morihisa, Taijiro, Tokyo 143-8555 (JP); Takagi, Morihiro, Tokyo 143-8555 (JP)
(74) Representative: J A Kemp

(56) References cited:
- US-A1- 2002 001 036
- US-A1- 2009 303 375
- US-A1- 2010 066 869

## Description

The present invention relates to an imaging apparatus and a control method thereof.

Regarding electronic still cameras as an example of imaging apparatuses, generally, by displaying a live view image, a user confirms a shooting range, white balance, exposure, and a focusing state for still photography shooting, and so on.

However, in the case where a user performs focusing manually, a general live view image has low resolution, and therefore a focusing state can not be precisely confirmed, thus making it difficult to perform focusing correctly.

In order to solve the above-described problem, Japanese Patent Application Publication number 2007-28380 discloses that in an image for focusing, a specific color is added to each pixel along an outline of a photographic subject, and variations or tones of colors are changed according to clarity of the outline, and thereby a focusing state is precisely confirmed.

Additionally, Japanese Patent Application number 2009-272837 discloses that when operation of a focusing ring is performed, in an image for focusing, a specific color is added to each pixel along an outline of a photographic subject, and thereby confirmation of a focusing state is easily made.

However, though a color is added along an outline of a photographic subject in a live view image as disclosed in Japanese Patent Application Publication numbers 2007-28380 and 2009-272837, there is difficulty in viewing when the color of the outline is similar to the color tone of the photographic subject part, and it is difficult to precisely confirm a focusing state.

US 2010/066869 A1 discloses a video signal processing apparatus including a level detection unit configured to detect a level of a high-frequency component extracted from an input video signal to determine whether or not the detector level is in excess of a preset predetermined threshold level, and a signal output unit configured to output, as a colour video signal, an input video signal in a section in which the level of the high-frequency component has been determined by the level detection unit to be in excess of the predetermined threshold value and, as a monochromatic video signal, an input video signal in a section in which the level of the high-frequency component has been determined to be lower than the predetermined threshold value.

US 2009/3033756 A1 discloses an image sensing apparatus including a display control unit which controls an image display unit to display an image sensed by an image input unit. The image sensing apparatus also includes a signal strength detection unit which detects, from a sensed image, a luminance area formed from pixels satisfying a predetermined luminance condition, and a special area detection unit which detects, from a sensed image, an object area having a predetermined feature. The display control unit controls the image display unit to display and assist image representing the luminance area, so as to be superimposed on a sense image. The display control unit changes the assist image display method between a case in which the luminance area and object area overlap each other and a case in which they do not overlap each other.

An object of the present invention is to provide an imaging apparatus that makes it possible for a user to easily and precisely confirm a focusing state when focusing, and also confirm the composition of a photographic subject if necessary, and a control method thereof.

The scope of the invention is defined in the appended claims.

FIG. 1 is a top view illustrating a constitution of a digital camera as an imaging apparatus according to an embodiment of the present invention.
FIG. 2 is a front view illustrating the constitution of the digital camera as the imaging apparatus according to the embodiment of the present invention.
FIG. 3 is a rear view illustrating the constitution of the digital camera as the imaging apparatus according to the embodiment of the present invention.
FIG. 4 is a block diagram illustrating a system constitution of the digital camera as the imaging apparatus according to the embodiment of the present invention.
FIG. 5 is a block diagram illustrating a constitution of a processing system regarding a live image display of a monitoring operation in the digital camera as the imaging apparatus according to the embodiment of the present invention.
Each of FIG. 6A to 6C is a schematic diagram illustrating image data per signal-processing step for a live view image display in a CCD signal-processing block in FIG. 5.
FIG. 7 is a schematic diagram illustrating an example of a composite image displaying on a display device.
FIG. 8 is a flow diagram illustrating signal-processing steps for a live view image display in the processing system in FIG. 5

Hereinafter, an imaging apparatus and a control method thereof according to an embodiment of the present invention will be explained.

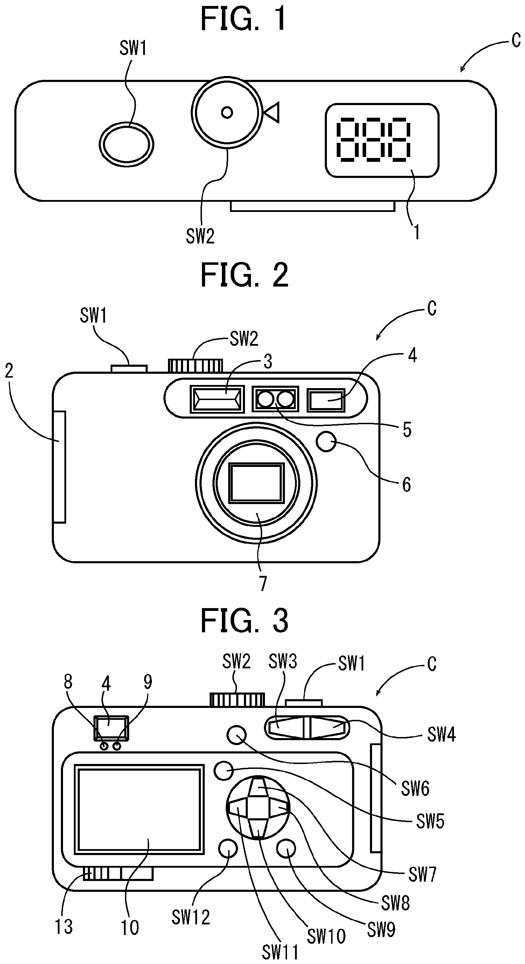

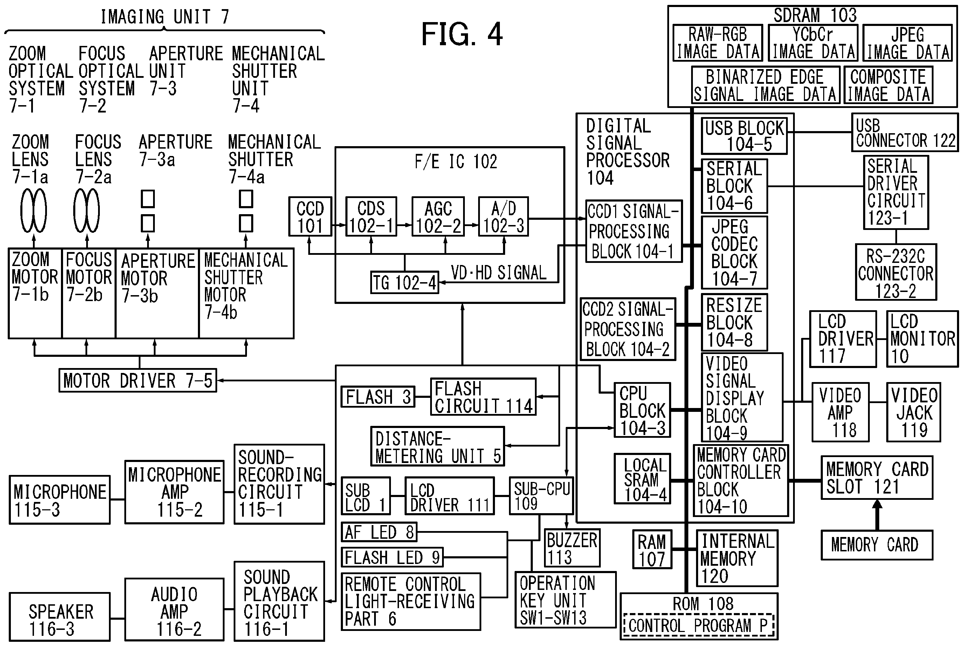

Each of FIGs. 1 to 3 is an external view of a digital camera as an imaging apparatus according to an embodiment of the present invention. FIG. 1 is a top view of the digital camera, FIG. 2 is a front view of the digital camera, and FIG. 3 is a rear view of the digital camera. FIG. 4 is a block diagram illustrating a system constitution in the digital camera.

In FIG. 1, reference code C denotes a digital camera as an imaging apparatus.

As illustrated in FIG. 1, in an upper part of the digital camera C, a sub-liquid crystal display (hereinafter, liquid crystal display referred to as LCD) 1, a shutter release button SW1, and a mode dial SW2 are provided. As illustrated in FIG. 2, in a side part of the digital camera C, a cover (battery cover) of a SD card (memory card)/ battery slot 2 is provided. On a front side of the digital camera C, a flash 3, an optical viewfinder 4, a distance-metering unit 5, a remote control light-receiving part 6, a lens barrel unit 7 having a shooting lens are provided.

Additionally, as illustrated in FIG. 3, on a rear side of the digital camera C, the optical view finder 4, an AF LED 8, a flash LED 9, an LCD monitor 10, a wide-angle zoom switch (ZOOM SW (WIDE)) SW3, a telephoto zoom switch (ZOOM SW (TELE)) SW4, a self-timer setting/cancel switch (self-timer/delete SW) SW5, a playback switch SW6, an up movement/ flash setting switch (up/ flash SW) SW7, a right movement switch (right SW) SW8, a display switch SW9, a down movement/ macro setting switch (down/ macro SW) SW10, a left movement/ image confirmation switch (left/ image confirmation SW) SW11, a menu (MENU)/ OK switch SW12, and a power switch SW13 are provided. The above-described switches SW1 to SW13 constitutes an operation key unit.

As illustrated in FIG. 4, reference number 104 denotes a digital signal processor (hereinafter, referred to as processor). The processor 104 includes a CPU (Central Processing Unit), and each part of the digital camera C is controlled by the processor 104.

As illustrated in FIG. 4, the lens barrel unit 7 includes a zoom optical system 7-1, a focus optical system 7-2, an aperture unit 7-3, and a mechanical shutter unit 7-4. The zoom optical system 7-1 includes a zoom lens 7-1a that captures an optical image of a photographic subject. The focus optical unit 7-2 includes a focus lens 7-2a that forms an image on a light-receiving part of a CCD (Charge-Coupled Device) 101 as a solid-state image sensor for photoelectrically converting the optical image of the photographic subject. The aperture unit 7-3 includes an aperture 7-3a. The mechanical shutter unit 7-4 includes a mechanical shutter 7-4a.

The zoom optical system 7-1, the focus optical system 7-2, the aperture unit 7-3, and a mechanical shutter unit 7-4 are driven by a zoom motor 7-1b, a focus motor 7-2b, an aperture motor 7-3b, and a mechanical shutter motor 7-4b, respectively.

Each of the motors 7-1b to 7-4b is driven by a motor driver 7-5. The motor driver 7-5 is driven and controlled by a drive instruction from a CPU block 104-3 of the processor 104, based on an input of the remote control light-receiving part 6, and an operation input of the operation key unit SW1 to SW13.

An image of a photographic subject formed on the light-receiving part of the CCD 101 by the optical systems 7-1, and 7-2 of the lens barrel unit 7 is converted to an image signal by the CCD 101, and the image signal is outputted to an F/E (Front/End) -IC 102.

The F/E-IC 102 includes a CDS 102-1, an AGC 102-2, and an A/D 102-3. The CDS 102-1 performs correlative double sampling for image noise removal. The AGC 102-2 performs gain control automatically. The A/D 102-3 converts an analog image signal outputted from the AGC 102-2 to a digital image signal.

The F/E-IC 102 performs predetermined processes such as a noise reduction, the gain control, and the like on the analog image signal outputted from the CCD 101, converts the analog image signal to a digital image signal, and outputs it to a CCD1 signal-processing block 104-1 of the processor 104.

A timing process such as image signal sampling by the F/E-IC 102, or the like is performed by a TG 102-4 based on a vertical synchronisation signal (hereinafter, referred to as VD) and a horizontal synchronization signal (hereinafter, referred to as HD) fed back from the CCD1 signal-processing block 104-1 of the processor 104.

The processor 104 includes the CCD1 signal-processing block 104-1, a CCD2 signal-processing block 104-2, a CPU block 104-3, a local SRAM 104-4, a USB block 104-5, a serial block 104-6, a JPEG CODEC block 104-7, a resize block 104-8, a video signal display block 104-9, and a memory card controller block 104-10. The CCD1 signal-processing block 104-1 performs white balance setting and gamma setting on output data from the F/ E-IC 102, and provides the VD signal and the HD signal as described above. The CCD2 signal-processing block 104-2 performs conversion to brightness data (Y), and color difference data (CbCr) by a filtering process, and performs a predetermined signal process. The CPU block 104-3 controls operation of each part of the imaging apparatus. The local SRAM 104-4 temporarily stores data necessary for control. The USB block 104-5 performs USB communication with an external device such as a PC, or the like. The serial block 104-6 performs serial communication with an external device such as a PC, or the like. The JPEG CODEC block 104-7 performs JPEG compression and decompression. The resize block 104-8 performs enlargement and reduction of the size of image data by an interpolation process. The video signal display block 104-9 converts image data to a video signal to be displayed on an external display device such as an LCD monitor, a TV, and so on. The memory card controller block 104-10 performs control on a memory card that stores shot image data. Each of blocks 104-1 to 104-10 is connected to each other via a bus line,

Outside the processor 104, a SDRAM 103, a RAM 107, a ROM 108, and an internal memory 120 are provided, In the ROM 108, a control program written in a code readable in the CPU block 104-3, a parameter for control, and so on are stored. The internal memory 120 stores image data of a shot image. The SDRAM 103, the RAM 107, the ROM 108, and the internal memory 120 are connected to the processor 104 via a bus line.

The SDRAM 103 temporarily stores image data in a case where various processes are performed on image data in the processor 104. For example, stored data arc "RAW-RGB image data", "YCbCr image data", "JPEG image data", "binarized edge signal image data", "composite image data", and the like, The RAW-RGB image data is data that is loaded from the CCD 101 via the F/ E-IC 102, and is in a state where the white balance setting and the gamma setting are performed in the CCD1 signal-processing block 104-1. The YCbCr image data is data that is in a state where brightness data and color difference data conversions are performed in the CCD2 signal-processing block 104-2. The JPEG image data is data that is in a state where the JPEG compression is performed in the JPEG CODEC block 104-7. The binarized edge signal image data is data that is obtained based on brightness data in the CCD2 signal-processing block 104-2. The composite image data is data that is obtained by combining the YCbCr image data and the binarized edge signal image data in the CCD2 signal-processing block 104-2.

In a case where the power switch SW13 is turned on, the control program stored in the ROM 108 is loaded to a memory of the processor 104. The CPU block 104-3 controls operation of each part of the digital camera C according to the control program, and temporarily stores data or the like necessary for control in the RAM 107 and the local SRAM 104-4. Additionally, by using a rewritable flash ROM such as the ROM 108, it is possible to change a control program and a parameter for control, and easily update a function.

In a case where the control program is performed, a memory of the RAM 107 is used as a memory for operation of the control program; therefore, in the memory of the RAM 107, writing or reading out of control data of the control program, the parameter, and the like is performed as required.

All the processes described later are performed mainly by the processor 104, by performing the control program.

The CPU block 104-3 is connected to a sound-recording circuit 115-1, a sound playback circuit 116-1, a flash circuit 114, the distance-metering unit 5, and a sub-CPU 109. The flash circuit 114 lights the flash 3. The distance-metering unit 5 measures the distance to the photographic subject. The above circuits are controlled by the CPU block 104-3.

A sound signal captured by a microphone 115-3 is amplified by a microphone AMP 115-2, converted to a digital signal by the sound-recording circuit 115-1, and then stored in a memory card, or the like according to a control instruction of the CPU block 104-3.

The sound playback circuit 116-1 converts appropriate sound data stored in the ROM 108 and the like to a sound signal according to a control instruction of the CPU block 104-3. The sound signal is amplified by an audio AMP 116-2, and then outputted from a speaker 116-3.

The sub-CPU 109 is a CPU in which a ROM and a RAM are built in one chip. The sub LCD 1 is connected to the sub-CPU 109 via an LCD driver 111, and the remote control light-receiving part 6, the AF LED 8, the flash LED 9, the operation key unit constituted by the switches SW1 to SW13, and a buzzer 113 are connected to the sub-CPU 109, and those are controlled by the sub-CPU 109. Additionally, the sub-CPU 109 outputs an output signal of the operation key unit SW1 to SW13 and the remote control light-receiving part 6 as operation information of a user to the CPU block 104-3, and converts a state of the digital camera outputted from the CPU block 104-3 to a control signal of the sub LCD 1, the AF LED 8, the flash LED 9, and the buzzer 113 and outputs it.

The sub LCD 1 is a display part that displays, for example, the number of photographable images, or the like. The LCD driver 111 is a drive circuit that drives the sub LCD 1 based on an output signal of the sub-CPU 109.

The AF LED 8 is an LED that displays a focusing state when shooting. The flash LED 9 is an LED that displays a charging condition of the flash. The AF LED 8 and the flash LED 9 may be used for other display uses such as displaying "accessing memory card".

The operation key unit SW1 to SW13 is a key circuit that a user operates. The remote control light-receiving part 6 is a receiving part of a signal of a remote controller that a user operates.

The USB block 104-5 of the processor 104 is connected to a USB connector 122 for USB connection to an external device such as a PC, or the like. The serial block 104-6 of the processor 104 is connected to an RS-232C connector 123-2 via a serial driver circuit 123-1. The serial driver circuit 123-1 is a circuit that converts an output signal of the serial block 104-6 to a voltage. Data communication is performed between the digital camera C and an external device connected to the digital camera C by the USB block 104-5 and the serial block 104-6.

An LCD driver 117 and a video AMP 118 are connected to the video signal display block 104-9 of the processor 104. The LCD driver 117 is a drive circuit that drives the LCD monitor 10, and has a function that converts a video signal outputted from the video signal display block 104-9 to a signal to be displayed on the LCD monitor 10. The video AMP 118 amplifies a video signal (TV signal), and performs 73Ω impedance matching. The LCD driver 117, and the video AMP 118 are connected to the LCD monitor 10, and a video jack 119 that connects to an external display device such as the LCD monitor 10, a TV,and so on, respectively.

The video signal display block 104-9 converts image data to a video signal, and outputs to the LCD monitor 10, and the external display device connected to the video Jack 119.

The LCD monitor 10 is used for monitoring a photographic subject while shooting, displaying a shot image, and displaying an image stored in the memory card or the internal memory 120.

A memory card slot 121 is connected to the memory card controller block 104-9. The memory card controller block 104-9 performs exchange of image data between a memory card for expansion inserted in the memory card slot 121 and the digital camera C.

Next, operation of the digital camera C according to an embodiment of the present invention will be explained.

Operation modes of the digital camera C includes a shooting mode used in a case of shooting, a playback mode used in a case of playing back a shot image. As the shooting mode, there are an AF mode that performs autofocus control on the focus optical system 7-2, and a MF mode that performs focusing manually.

Additionally, as operation modes while operating in the shooting mode, a self-timer mode in which shooting is performed using a self-timer, and a remote control mode in which the digital camera is remotely operated by a remote controller are provided.

In a state where the power switch SW13 of the digital camera C is turned on, when the mode dial SW2 is set to the shooting mode, the digital camera C is in the shooting mode, and when the mode dial SW2 is set to the playback mode, the digital camera C is in the playback mode. In detail, the following steps are taken.

### (Step S11)

Firstly, when the power switch SW13 of the digital camera C is turned on, confirmation of the operation mode is made. That is, a state of the mode dial SW2 is confirmed whether to be the shooting mode, or the playback mode. If it is confirmed to be the shooting mode, the operation proceeds to step S12. If it is confirmed to be the playback mode, the operation proceeds to step S21.

### [Shooting Mode]

### (Step S12)

The motor driver 7-5 is controlled by the processor 104, and the lens barrel constituting the lens barrel unit 7 is moved to a photographable position. Further, each of the circuits necessary for shooting such as the CCD 101) the F/E-IC 102, the LCD monitor 10, and the like is powered on.

### (Step S13)

And then, information of an image of a photographic subject formed on the light-receiving part of the CCD 101 by the zoom optical system 7-1 and the focus optical system 7-2 is converted to an RGB analog signal by the CCD 101 as required, Predetermined processes such as a noise reduction, a gain adjustment, and the like are performed on the RGB analog signal by the CDS circuit 102-1 and the AGC 102-2, and by the A/D 102-3, the RGB analog signal is converted to an RGB digital signal, and outputted to the CCD1 signal-processing block 104-1 of the processor 104.

### (Step S14)

Furthermore, the RGB digital signal is converted to RAW-RGB image data, YCbCr image data, binarized edge signal image data, composite image data, and JPEG image data by signal processes of the CCD1 signal-processing block 104-1, and the CCD2 signal-processing block 104-2, which are written in a frame memory of the SDRAM 103 by a memory controller (not-illustrated).

### (Step S15)

The binarized edge signal image data or the composite image data of those image data are read out the frame memory of the SDRAM 103 as required, and converted to a video signal by the video single display block 104-9, and outputted to the LCD monitor 10, or the external display device such as the TV, or the like as a live view image.

Thus, in a shooting standby state, operation in which image data of the photographic subject is captured in the frame memory of the SDRAM 103 as required, and an image of a photographic subject (live view image) is outputted to the LCD monitor 10, or the external display device such as the TV, or the like as required is called a monitoring operation.

### (Step S16)

Next, a state of the shutter release button SW1 is confirmed. When the shutter release button SW1 is not pressed, the operation returns to step S12. When the shutter release button SW1 is pressed, operation in which image data (JPEG image data) of a photographic subject temporarily stored in the frame memory of the SDRAM 103 is stored in the internal memory 120 or the memory card, and the like are performed, and then the operation returns to step S12. Operation in the present step is called a shooting operation.

Thus, when the digital camera C is operated in the shooting mode, operations of steps S12 to S16 are repeated. A state where those repetitive operations are performed is called a viewfinder mode. In a predetermined cycle (for example, a cycle of 1/ 30 second), those operations are repeated. In the viewfinder mode, since the monitoring operation is also repeatedly performed in about a cycle of 1/30 second, accompanied by this operation, the display of the LCD monitor 10, or the external display device is updated.

### [Playback Mode]

### (Step S21)

The image data stored in the internal memory 120 or the memory card is outputted to the LCD monitor 10 or the external display device such as the TV or the like.

### (Step S22)

And then, it is confirmed whether change of a setting of the mode dial SW2 is performed or not. If the change of the setting of the mode dial SW2 is performed, the operation returns to step S11. If the change of the setting of the mode dial SW2 is not performed, the operation returns to step S21.

In a case of the above-described monitoring operation in the shooting mode, a user confirms a focusing state of a photographic subject by viewing a live view image displayed on the LCD monitor 10. When the photographic subject is out of focus in the live view image, both in the AF mode and the MF mode, while viewing the live view image displayed on the LCD monitor 10, by pressing the up/ flash switch SW7, or the down/ macro switch SW10 (or turning a focus ring), the user adjusts a position of the focus lens 7-2a in the lens barrel unit 7 so as to focus on the photographic subject. At this time, as disclosed in Japanese Patent Application Publication numbers 2007-28380 and 2009-272837, in the inventions such that a color is added along an outline of a photographic subject in a live view image, it is hard to tell the difference when a color of the outline is similar to a color tone of a photographic subject part, and it is difficult to precisely confirm a focusing state, Based on the idea that such confirmation of the focusing state is made with the outline of the photographic subject, and an image of the photographic subject is not always needed, a constitution that displays only the outline of the photographic subject as the live view image has been considered. However, with this constitution, although it is possible to precisely confirm the focusing state, there still is a case where it is difficult to recognize a state of a photographic subject in an image, and it is difficult to determine a composition including the photographic subject as an image to be shot. Here, cases of problematic shooting compositions are a case where a face of a person is included in a photographic subject, and a case where a photographic subject is comparatively distant from an imaging apparatus, and included in a wide range. Hereinafter, foundation of the digital camera C according an embodiment of the present invention will be explained.

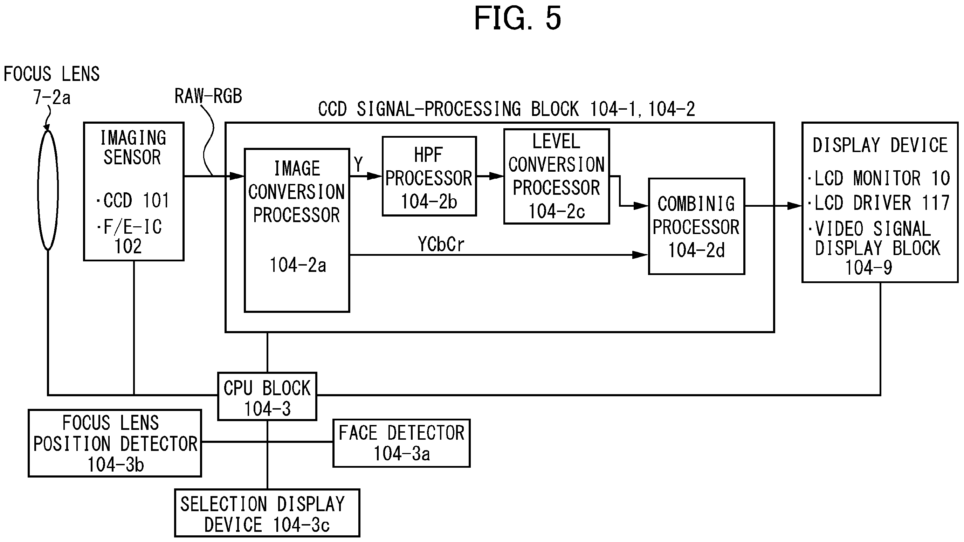

FIG. 5 is a block diagram illustrating a constitution of a processing system regarding a live view image display of the monitoring operation in the digital camera C as the imaging apparatus according to an embodiment of the present invention.

In the digital camera C, the processing system regarding the live view image display of the monitoring operation, as illustrated in FIG. 5, includes the focus optical system 7-2 in the imaging optical system (lens barrel unit 7), an imaging sensor (CCD 101, F/E-IC 102), a CCD signal-processing block (CCD1 signal-processing block 104-1, CCD2 signal-processing block 104-2), a display device (LCD monitor 10, LCD driver 117, video signal display block 104-9), and the CPU block 104-3. The imaging sensor photoelectrically converts an image of a photographic subject formed by the imaging optical system and outputs image data. The CCD signal-processing block includes an image conversion processor 104-2a, a high-pass filter (HPF) processor 104-2b, a level conversion processor 104-2c, and a combining processor 104-2d, and processes a signal of image data (RAW-RGB) outputted from the imaging sensor. The display device displays a live view image based on image data obtained by the imaging sensor. The CPU block 104-3 includes a face detector 104-3a, a focus lens position detector 104-3b, and a selection display device 104-3c, and the CPU block 104-3. The CPU block 104-3 is a display controller that controls each part according to a control program.

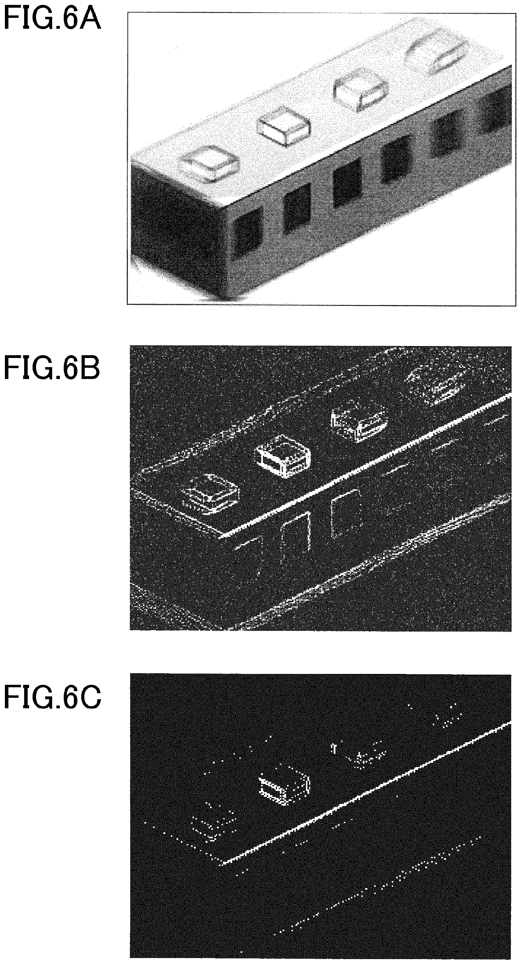

Here, the image conversion processor 104-2a has a part of processing functions of the CCD1 signal-processing block 104-1 and the CCD2 signal-processing block 104-2. The image conversion processor 104-2a performs a white balance process, a color interpolation process, and the like on the image data (RAW-RGB) sent from the imaging sensor (F/ E-IC 102), and then performs a process that divides it into brightness (Y) data, and color difference (CbCr) data. In FIG. 6A, an image diagram of brightness (Y) data is shown. Here, a rectangular parallelepiped that has a convex part and an opening part on a surface is a photographic subject, and an example is shown such that the photographic subject is in focus around a center part of the image, and gets out of focus in a peripheral part of the image. Additionally, a color difference Cb is a value obtained from a color difference signal (B-Y) where brightness Y is subtracted from a primary color signal B multiplied by a specific constant, and likewise a color difference Cr is a value obtained from a color difference signal (R-Y) where brightness Y is subtracted from a primary color signal R multiplied by a specific constant.

The image conversion processor 104-2a sends brightness (Y) data to the HPF processor 104-2b, and sends YCbCr image data to the combining processor 104-2d.

The HPF processor 104-2b as a filtering processor performs a high-pass filter process that passes a high-frequency component on the brightness (Y) data sent from the image conversion processor 104-2a, and outputs an edge signal in which the brightness (Y) drastically changes. In FIG. 6B, an image diagram of an edge signal obtained by performing the high-pass filter process on the brightness (Y) data in FIG. 6A. In the drawing, a white dot depicts a edge signal where an edge level is somewhat high.

The level conversion processor 104-2c as a binarization processor performs a level conversion process that performs binarization by a predetermined threshold value on the edge signal sent from the HPF processor 104-2b, and outputs a binarized edge signal. Therefore, only a part where the edge level is high is passed, and as a result, only an outline in which the photographic subject is in focus is obtained. In FIG. 6C, the level conversion process is performed on the edge signal in FIG. 6B, and an example (image diagram) of the obtained binarized edge signal image data displayed on the display device is shown.

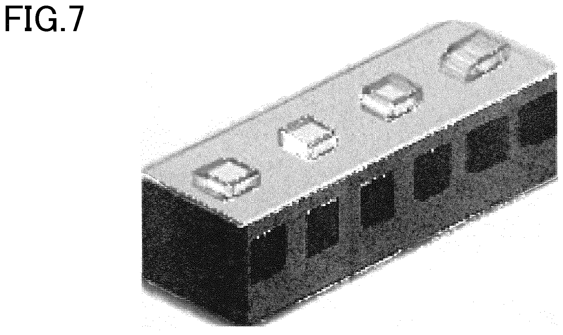

The combining processor 104-2d performs a combining process that overlaps the binarized edge signal image data and YCbCr image data, that is, process that adds original brightness (Y) data and color difference (CbCr) data to the binarized edge signal image data, and outputs it as composite image data to the display device (FIG. 7). This is image data in which an outline is illustrated in the YCbCr image. Alternatively, the combining processor 104-2d does not perform the combining process, and outputs the binarized edge signal image data to the display device directly.

Additionally, the face detector 104-3a detects whether there is a face of a person in image data. In particular, the face detector 104-3a copies one image data at a certain timing from monitoring image data (for example, YCbCr image data), and performs a face detection process on the copied image data, and confirms whether there is a face of a person in an image. A method of detecting an image of a person in an image of a photographic subject may be performed with a known method, for example, one of the following methods may be used.
(1) The Journal of the Institute of Television Engineers of Japan Vol.49, No. 6, pp. 787-797 (1995) "A proposal of the Modified HSV Colour System Suitable for Human Face Extraction", which discloses a method such that a color image is mosaicked, and a face area is extracted based on a skin color area.
(2) The Journal of the Institute of Electronics, Information and Communication Engineers Vol. 74-D-II, No. 11, pp. 1625-1627 (1991) "A method of extracting a face area from a still light and shade scene image", which discloses a method such that a head area of a frontal face of a person is extracted by using a geometrical shape characteristic regarding each part constituting a head part of a frontal image of a person such as hair, eyes, a mouth, and so on.
(3) Image Laboratory 1991-11 (1991) published by Japan Industrial Publishing Co., Ltd. "Face area detection for TV phone and its effect", which discloses that a method such that in a case of a moving image, a frontal image of a person is extracted by using an outline edge of an image of the person occurring by subtle motions of the person between frames.

The focus lens position detector 104-3b detects a position of the focus lens 7-2a in a movable range, while focusing, or when completing focusing. In particular, the focus lens position detector 104-3b detects whether the position of the focus lens 7-2a while focusing is on a shorter distance side than in a predetermined position in the movable range.

The selection display device 104-3c displays a display format of a live view image displayed on the display device so that a user can select either a display format based on binarized edge signal data (binarized edge signal image data) or a display format based on combined image data (composite image data). For example, on the LCD monitor 10, "composite image?" or "only edge signal?" are displayed, and either of them is selected by operating the right switch SW8 and the left/image confirmation switch SW11.

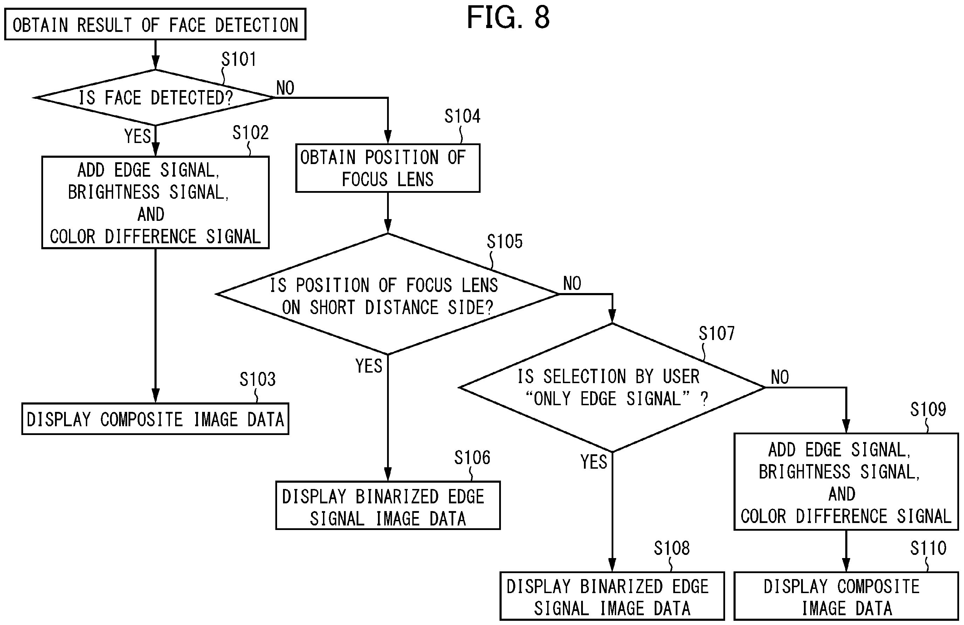

In the processing system described in FIG. 5, the following signal-processing control for a live view image display is performed by the CPU block 104-3, and will be explained with reference to FIG. 8.

### (Step S101)

When the digital camera C is in the shooting standby mode of the shooting mode, the monitoring operation is performed, Firstly, the CPU block 104-3 obtains a result of face detection from the face detector 104-3a, and confirms whether a face is detected from image data.

### (Step S102)

In a case where a face is detected (YES of step S101), the combining processor 104-2d adds a binarized edge signal outputted from the level conversion processor 104-2c, and original brightness (Y) signal and color difference (CbCr) signal outputted from the image conversion processor 104-2a, and outputs composite image data.

### (Step S103)

The LCD monitor 10 of the display device displays the outputted composite image data as a live view image. Thus, for example, on the LCD monitor 10, a live view image including an outline, and a photographic subject that is colored in a part other than the outline is displayed, and therefore a user can view the outline and also a state of the photographic subject, and determine a composition while focusing, and viewing a facial expression, movement of a person, and so on.

### (Step S104)

In a case where a face is not detected, that is, a face is not included in a photographic subject (NO of step S101), the CPU block 104-3 obtains a result of focus lens position detection from the focus lens position detector 104-3b, and confirms whether focus is determined at a short distance, that is, confirms whether the position of the focus lens 7-2a is on a shorter distance side than in the predetermined position in the movable range.

### (Step S105)

In a case where the focus is determined at the short distance, that is, in a case where the position of the focus lens 7-2a is on the shorter distance side than in the predetermined position in the movable range (YES of step S104), the combining processor 104-2d outputs the binarized edge signal image data outputted from the level conversion processor 104-2c, and the LCD monitor 10 of the display device displays the binarized edge signal image data as a live view image (for example, FIG. 6C). This is because a person (face) as a photographic subject is not included, and the photographic subject is at a comparatively short distance, and therefore it is not necessary to determine a composition. Thus, for example, on the LCD monitor 10, a live view image which has a white-colored outline, and the rest of which other than the white-colored outline that is an achromatic colored (gray-colored) part is displayed, and therefore it is no longer difficult to recognize the outline due to a color of the photographic subject, and it is easily possible to perform focusing.

### (Step S106)

In a case where the focus is not determined at the short distance, that is, in a case where the position of the focus lens 7-2a is not on the shorter distance side than in the predetermined position in the movable range (NO of step S104), the selection display device 104-3c displays a display format so that a user can select either a display format based on binarized edge signal image data ("only edge signal") or a display format based on combining image data ("composite image"). The CPU block 104-3 confirms whether selection by the user is the display format based on the image data of the binarized edge signal ("only edge signal?"). This is because a user can select a user-friendly display format. Though a person (face) as a photographic subject is not included, there may be a case where the photographic subject is at a comparatively long distance, and a composition has to be determined.

### (Step S107)

In a case where the selection by the user is the display format based on the binarized edge signal image data ("only edge signal") (YES of S106), the combining processor 104-2d outputs the binarized edge signal image data outputted from the level conversion processor 104-2c, and the LCD monitor 10 of the display device displays the binarized edge signal image data as a live view image (for example, FIG. 6C).

### (Step S108)

In a case where the selection by the user is not the display format based on the image data of the binarized edge signal ("only edge signal") (NO of S106), the CPU block 104-3 determines that the selection by the user is the display format based on the combined image data ("composite image"), and the combining processor 104-2d adds a binarized edge signal outputted from the level conversion processor 104-2c and original brightness (Y) signal and color difference (CbCr) signal outputted from the image conversion processor 104-2a, and outputs composite image data.

### (Step S109)

The LCD monitor 10 of the display device displays the outputted composite image data as a live view image.

As described above, according to an embodiment of the present invention, in accordance with a shooting condition (focus lens position detection) and information (face detection) obtained from the image data, display of the live view image is controlled so as to be performed either in the display format based on the binarized edge signal data or in the display format based on the combined image data. Therefore, in a case such that there is no face of a person, that is, there is only a stationary object in a photographic subject, or in a case where a photographic subject is at a short distance where the depth of field is shallow, it is possible to precisely confirm a focusing state and perform suitable focusing by clearly displaying only an outline of the photographic subject. Additionally, in a case where a face of a person as a photographic subject is included, and it is necessary to determine a composition by a facial expression or movement of the person, or the like, it is easily possible to achieve both of confirming a focusing state and determining a composition by overlapping an outline with an image of the photographic subject and displaying it.

Although the present invention has been described in terms of exemplary embodiments, it is not limited thereto. It should be appreciated that variations may be made in the embodiments described by persons skilled in the art without departing from the scope of the present invention as defined by the following claims.

For example, in the constitution of the processing system described in FIG. 5, either the face detector 104-3a, or the focus lens position detector 104-3b can be omitted.

According to an embodiment of the present invention, in accordance with a shooting condition and information obtained from the image data, display of the live view image is controlled so as to be performed by either the display format based on the binarized edge signal image data or the display format based on the composite image data. Therefore, in a case where there is no face of a person, that is, there is only a stationary object in a photographic subject, or in a case where a photographic subject is at a short distance where the depth of field is shallow, it is possible to precisely confirm a focusing state, and perform suitable focusing by clearly displaying only an outline of the photographic subject. Additionally, in a case where a face of a person as a photographic subject is included, and it is necessary to determine a composition by a facial expression or movement of the person, or the like, it is easily possible to achieve both of confirming a focusing state and determining a composition by overlapping an outline with an image of the photographic subject and displaying it.

## Claims

1. An imaging apparatus (C) comprising:
an imaging sensor (101, 102) configured to photoelectrically convert an image of a photographic subject formed by an imaging optical system and output image data;
a display device (10, 117, 104-9) configured to display a live view image based on the image data;
a filtering processor (104-2b) configured to filter a high-frequency component from brightness data of the image data, and output edge signal data;
a binarization processor (104-2d) configured to binarize the edge signal data by use of a predetermined threshold value; and
a combining processor (104-2d) configured to combine the binarized edge signal data, and the brightness data and color difference data of the image data, **characterized by** further comprising:
a display controller (104-3) configured to control a display of a live view image to be performed either in a display format based on the binarized edge signal data without the brightness data and color difference data of the image data, thereby to display only an outline in which the photographic subject is in focus, or in a display format based on the combined image data, in accordance with information obtained from a shooting condition and the image data; and
a focus lens position detector (104-3b) configured to detect a position of a focus lens of the imaging optical system, wherein the information obtained from a shooting condition comprises a position of the focus lens of the imaging optical system detected by the focus lens position detector.

2. The imaging apparatus according to Claim 1, further comprising:
a face detector (104-3 a) configured to detect a face from the image data, wherein in a case where a face is detected by the face detector, the display controller performs the display of the live view image in the display format based on the combined image data.

3. The imaging apparatus according to Claim 1, further comprising:
a face detector (104-3 a) configured to detect a face from the image data, and
a focus lens position detector (104-3b) configured to detect a position of a focus lens of the imaging optical system,
wherein in a case where a face is not detected by the face detector, the display controller performs the display of the live view image in accordance with a position of the focus lens of the imaging optical system detected by the focus lens position detector.

4. The imaging apparatus according to Claim 1 or 3,
wherein in a case where the position of the focus lens of the imaging optical system detected by the focus lens position detector is on a shorter distance side than in a predetermined position, the display controller performs the display of the live view image in the display format based on the binarized edge signal data.

5. The imaging apparatus according to Claim 1 or 3, further comprising:
a selection display device (104-3c) configured to display a display format of the live view image so that a user can select either the display format based on the binarized edge signal data or the display format based on the combined image data,
wherein in a case where the position of the focus lens position detector is not on a shorter distance side than in a predetermined position, the display controller performs the display of the live view image in the display format selected by the user.

6. A control method of an imaging apparatus, comprising the steps of:
photoelectrically converting an image of a photographic subject formed by an optical imaging system and outputing image data;
displaying a live view image based on the image data;
filtering a high-frequency component from brightness data of the image data, and outputting edge signal data:
binarizing the edge signal data by use of a predetermined threshold value; and
combining the binarized edge signal data, and the brightness data and color difference data of the image data, **characterized by** further comprising:
controlling a display of a live view image to be performed either in a display format based on the binarized edge signal data without the brightness data and color difference data of the image data, thereby to display only an outline in which the photographic subject is in focus, or in a display format based on the combined image data, in accordance with information obtained from a shooting condition and the image data; and
detecting a position of a focus lens of the imaging optical system,
wherein the information obtained from a shooting condition comprises a position of the focus lens of the imaging system detected in the step of detecting the position of the focus lens of the imaging optical system.

7. The control method of the imaging apparatus according to Claim 6, further comprising the step of:
detecting a face from the image data,
wherein in a case where a face is detected in the step of detecting the face, the display of the live view image is performed in the display format based on the combined image data.

8. The control method of the imaging apparatus according to Claim 6, further comprising the steps of:
detecting a face from the image data, and
detecting a position of a focus lens of the imaging optical system,
wherein in a case where a face is not detected in the step of detecting the face from the image data, the display of the live view image is performed in accordance with a position of the focus lens of the imaging system detected in the step of detecting the position of the focus lens of the imaging optical system.

9. The control method of the imaging apparatus according to Claim 6 or Claim 8, wherein in a case where the position of the focus lens of the imaging optical system detected in the step of detecting the position of the focus lens of the imaging optical system is on a shorter distance side than in a predetermined position, the display of the live view image in the display format based on the binarized edge signal data is performed.

10. The control method of the imaging apparatus according to Claim 6 or Claim 8, further comprising a step of:
displaying a display format of the live view image so that a user can select either the display format based on the binarized edge signal data or the display format based on the combined image data,
wherein in a case where the position of the focus lens of the imaging optical system detected in the step of detecting the position of the focus lens of the imaging optical system is not on a shorter distance side than in a predetermined position, the display of the live view image is performed in the display format selected by the user.

## Patentansprüche

1. Bildgebungsvorrichtung (C), umfassend:
einen Bildgebungssensor (101, 102), der konfiguriert ist, um ein Bild eines fotografischen Subjekts, das durch ein optisches Bildgebungssystem gebildet wird, photoelektrisch umzuwandeln und Bilddaten auszugeben;
eine Anzeigevorrichtung (10, 117, 104-9), die konfiguriert ist, um ein Live-View-Bild basierend auf den Bilddaten anzuzeigen;
einen Filterungsprozessor (104-2b), der konfiguriert ist, um eine Hochfrequenzkomponente aus Helligkeitsdaten der Bilddaten zu filtern und Grenzsignaldaten auszugeben;
einen Binarisierungsprozessor (104-2d), der konfiguriert ist, um die Grenzsignaldaten durch Verwenden eines vorbestimmten Schwellenwerts zu binarisieren; und
einen Kombinierungsprozessor (104-2d), der konfiguriert ist, um die binarisierten Grenzsignaldaten und die Helligkeitsdaten und Farbdifferenzdaten der Bilddaten zu kombinieren, **dadurch gekennzeichnet, dass** sie ferner Folgendes umfasst:
eine Anzeigesteuerung (104-3), die konfiguriert ist, um eine Anzeige eines Live-View-Bilds zu steuern, das entweder in einem Anzeigeformat basierend auf den binarisierten Grenzsignaldaten ohne die Helligkeitsdaten und Farbdifferenzdaten der Bilddaten, um dadurch nur einen Umriss anzuzeigen, in dem das fotografische Subjekt im Fokus ist, oder in einem Anzeigeformat basierend auf den kombinierten Bilddaten gemäß den Informationen, die aus einer Aufnahmebedingung und den Bilddaten erlangt werden, ausgeführt werden soll; und
einen Fokuslinsen-Positionsdetektor (104-3b), der konfiguriert ist, um eine Position einer Fokuslinse des optischen Bildgebungssystems zu erfassen, wobei die aus einer Aufnahmebedingung erlangten Informationen eine Position der Fokuslinse des optischen Bildgebungssystems umfasst, die durch den Fokuslinsen-Positionsdetektor erfasst wird.

2. Bildgebungsvorrichtung nach Anspruch 1, ferner umfassend:
einen Gesichtsdetektor (104-3a), der konfiguriert ist, um ein Gesicht aus den Bilddaten zu erfassen, wobei in einem Fall, in dem ein Gesicht durch den Gesichtsdetektor erfasst wird, die Anzeigesteuerung die Anzeige des Live-View-Bilds in dem Anzeigeformat basierend auf den kombinierten Bilddaten ausführt.

3. Bildgebungsvorrichtung nach Anspruch 1, ferner umfassend:
einen Gesichtsdetektor (104-3a), der konfiguriert ist, um ein Gesicht aus den Bilddaten zu erfassen, und
einen Fokuslinsen-Positionsdetektor (104-3b), der konfiguriert ist, um eine Position einer Fokuslinse des optischen Bildgebungssystems zu erfassen,
wobei in einem Fall, in dem kein Gesicht durch den Gesichtsdetektor erfasst wird, die Anzeigesteuerung die Anzeige des Live-View-Bilds gemäß einer Position der Fokuslinse des optischen Bildgebungssystems ausführt, die durch den Fokuslinsen-Positionsdetektor erfasst wird.

4. Bildgebungsvorrichtung nach Anspruch 1 oder 3,
wobei in einem Fall, in dem die Position der Fokuslinse des optischen Bildgebungssystems, die durch den Fokuslinsen-Positionsdetektor erfasst wird, auf einer kürzeren Abstandsseite als an einer vorbestimmten Position ist, die Anzeigesteuerung die Anzeige des Live-View-Bilds in dem Anzeigeformat basierend auf den binarisierten Grenzsignaldaten ausführt.

5. Bildgebungsvorrichtung nach Anspruch 1 oder 3, ferner umfassend:
eine Auswahlanzeigevorrichtung (104-3c), die konfiguriert ist, um ein Anzeigeformat des Live-View-Bilds anzuzeigen, sodass ein Benutzer entweder das Anzeigeformat basierend auf den binarisierten Grenzsignaldaten oder das Anzeigeformat basierend auf den kombinierten Bilddaten auswählen kann,
wobei in einem Fall, in dem die Position des Fokuslinsen-Positionsdetektors nicht auf einer kürzeren Abstandsseite als an einer vorbestimmten Position ist, die Anzeigesteuerung die Anzeige des Live-View-Bilds in dem von dem Benutzer gewählten Anzeigeformat ausführt.

6. Steuerverfahren einer Bildgebungsvorrichtung, umfassend die folgenden Schritte:
photoelektrisches Umwandeln eines Bilds eines fotografischen Subjekts, das durch ein optisches Bildgebungssystem gebildet wird, und Ausgeben von Bilddaten;
Anzeigen eines Live-View-Bilds basierend auf den Bilddaten;
Filtern einer Hochfrequenzkomponente aus Helligkeitsdaten der Bilddaten und Ausgeben von Grenzsignaldaten:
Binarisieren der Grenzsignaldaten durch Verwenden eines vorbestimmten Schwellenwerts; und
Kombinieren der binarisierten Grenzsignaldaten und der Helligkeitsdaten und Farbdifferenzwerte der Bilddaten, **dadurch gekennzeichnet, dass** es ferner Folgendes umfasst:
Steuern einer Anzeige eines Live-View-Bilds, die entweder in einem Anzeigeformat basierend auf den binarisierten Grenzsignaldaten ohne die Helligkeitsdaten und Farbdifferenzdaten der Bilddaten, um dadurch nur einen Umriss anzuzeigen, in dem das fotografische Subjekt im Fokus ist, oder in einem Anzeigeformat basierend auf den kombinierten Bilddaten gemäß den Informationen, die aus einer Aufnahmebedingung und den Bilddaten erlangt werden, ausgeführt werden soll; und
Erfassen einer Position einer Fokuslinse des optischen Bildgebungssystems,
wobei die aus einer Aufnahmebedingung erlangten Informationen eine Position der Fokuslinse des Bildgebungssystems umfasst, die in dem Schritt eines Erfassens der Position der Fokuslinse des optischen Bildgebungssystems erfasst wird.

7. Steuerverfahren der Bildgebungsvorrichtung nach Anspruch 6, ferner umfassend den folgenden Schritt:
Erfassen eines Gesichts aus den Bilddaten,
wobei in einem Fall, in dem ein Gesicht in dem Schritt eines Erfassens des Gesichts erfasst wird, die Anzeige des Live-View-Bilds in dem Anzeigeformat basierend auf den kombinierten Bilddaten ausgeführt wird.

8. Steuerverfahren der Bildgebungsvorrichtung nach Anspruch 6, ferner umfassend die folgenden Schritte:
Erfassen eines Gesichts aus den Bilddaten, und
Erfassen einer Position einer Fokuslinse des optischen Bildgebungssystems,
wobei in einem Fall, in dem in dem Schritt eines Erfassens des Gesichts kein Gesicht aus den Bilddaten erfasst wird, die Anzeige des Live-View-Bilds gemäß einer Position der Fokuslinse des Bildgebungssystems ausgeführt wird, die in dem Schritt eines Erfassens der Position der Fokuslinse des optischen Bildgebungssystems erfasst wird.

9. Steuerverfahren der Bildgebungsvorrichtung nach Anspruch 6 oder Anspruch 8, wobei in einem Fall, in dem die Position der Fokuslinse des optischen Bildgebungssystems, die in dem Schritt eines Erfassens der Position der Fokuslinse des optischen Bildgebungssystems erfasst wird, auf einer kürzeren Abstandsseite als an einer vorbestimmten Position ist, die Anzeige des Live-View-Bilds in dem Anzeigeformat basierend auf den binarisierten Grenzsignaldaten ausgeführt wird.

10. Steuerverfahren der Bildgebungsvorrichtung nach Anspruch 6 oder Anspruch 8, ferner umfassend einen folgenden Schritt:
Anzeigen eines Anzeigeformats des Live-View-Bilds, sodass ein Benutzer entweder das Anzeigeformat basierend auf den binarisierten Grenzsignaldaten oder das Anzeigeformat basierend auf den kombinierten Bilddaten auswählen kann,
wobei in einem Fall, in dem die Position der Fokuslinse des optischen Bildgebungssystems, die in dem Schritt eines Erfassens der Position der Fokuslinse des optischen Bildgebungssystems erfasst wird, auf einer kürzeren Abstandsseite als an einer vorbestimmten Position ist, die Anzeige des Live-View-Bilds in dem von dem Benutzer ausgewählten Anzeigeformat ausgeführt wird.

## Revendications

1. Appareil d'imagerie (C) comprenant :
un capteur d'imagerie (101, 102) configuré pour convertir photoélectriquement une image d'un sujet photographique formée par un système optique d'imagerie et produire en sortie des données d'image ;
un dispositif d'affichage (10, 117, 104-9) configuré pour afficher une image de vue en direct sur la base des données d'image ;
un processeur de filtrage (104-2b) configuré pour filtrer une composante haute fréquence à partir de données de luminosité des données d'image, et produire en sortie des données de signal de contour ;
un processeur de binarisation (104-2d) configuré pour binariser les données de signal de contour à l'aide d'une valeur seuil prédéterminée ; et
un processeur de combinaison (104-2d) configuré pour combiner les données de signal de contour binarisées, et les données de luminosité et des données de différence de couleur des données d'image, **caractérisé en ce qu'**il comprend en outre :
un dispositif de commande d'affichage (104-3) configuré pour commander un affichage d'une image de vue en direct pour être exécuté soit dans un format d'affichage basé sur les données de signal de contour binarisées sans les données de luminosité ou les données de différence de couleur des données d'image, pour ainsi afficher uniquement un contour dans lequel le sujet photographique est mis au point, soit dans un format d'affichage basé sur les données d'image combinées, en conformité avec des informations obtenues à partir d'une condition de prise de vue et des données d'image ; et
un détecteur de position d'objectif (104-3b) configuré pour détecter une position d'un objectif du système optique d'imagerie, les informations obtenues à partir d'une condition de prise de vue comprenant une position de l'objectif du système optique d'imagerie détectée par le détecteur de position d'objectif.

2. Appareil d'imagerie selon la revendication 1, comprenant en outre :
un détecteur de face (104-3a) configuré pour détecter une face à partir des données d'image, dans lequel dans un cas où une face est détectée par le détecteur de face, le dispositif de commande d'affichage exécute l'affichage de l'image de vue en direct dans le format d'affichage basé sur les données d'image combinées.

3. Appareil d'imagerie selon la revendication 1, comprenant en outre :
un détecteur de face (104-3a) configuré pour détecter une face à partir des données d'image, et
un détecteur de position d'objectif (104-3b) configuré pour détecter une position d'un objectif du système optique d'imagerie,
dans lequel dans un cas où une face n'est pas détectée par le détecteur de face, le dispositif de commande d'affichage exécute l'affichage de l'image de vue en direct en conformité avec une position de l'objectif du système optique d'imagerie détectée par le détecteur de position d'objectif.

4. Appareil d'imagerie selon la revendication 1 ou 3,
dans lequel dans un cas où la position de l'objectif du système optique d'imagerie détectée par le détecteur de position d'objectif se trouve su un côté de distance plus courte que dans une position prédéterminée, le dispositif de commande d'affichage exécute l'affichage de l'image de vue en direct dans le format d'affichage basé sur les données de signal de contour binarisées.

5. Appareil d'imagerie selon la revendication 1 ou 3, comprenant en outre :
un dispositif d'affichage de sélection (104-3c) configuré pour afficher un format d'affichage de l'image de vue en direct de sorte qu'un utilisateur puisse sélectionner soit le format d'affichage basé sur les données de signal de contour binarisées, soit le format d'affichage basé sur les données d'image combinées,
dans lequel dans un cas où la position du détecteur de position d'objectif ne se trouve pas sur un côté de plus courte distance que dans une position prédéterminée, le dispositif de commande d'affichage exécute l'affichage de l'image de vue en direct dans le format d'affichage sélectionné par l'utilisateur.

6. Procédé de commande d'un appareil d'imagerie, comprenant les étapes consistant à :
convertir photoélectriquement une image d'un sujet photographique formée par un système optique d'imagerie et produire en sortie des données d'image ;
filtrer une composante haute fréquence à partir de données de luminosité des données d'image, et produire en sortie des données de signal de contour ;
binariser les données de signal de contour à l'aide d'une valeur seuil prédéterminée ; et
combiner les données de signal de contour binarisées, et les données de luminosité et des données de différence de couleur des données d'image, **caractérisé en ce qu'**il comprend en outre :
la commande d'un affichage d'une image de vue en direct pour être exécuté soit dans un format d'affichage basé sur les données de signal de contour binarisées sans les données de luminosité ou les données de différence de couleur des données d'image, pour ainsi afficher uniquement un contour dans lequel le sujet photographique est mis au point, soit dans un format d'affichage basé sur les données d'image combinées, en conformité avec des informations obtenues à partir d'une condition de prise de vue et des données d'image ; et
la détection d'une position d'un objectif du système optique d'imagerie,
les informations obtenues à partir d'une condition de prise de vue comprenant une position de l'objectif du système d'imagerie détectée à l'étape de détection de la position de l'objectif du système optique d'imagerie.

7. Procédé de commande de l'appareil d'imagerie selon la revendication 6, comprenant en outre l'étape consistant à :
détecter une face à partir des données d'image,
dans lequel dans un cas où une face est détectée à l'étape de détection de la face, l'affichage de l'image de vue en direct est exécuté dans le format d'affichage basé sur les données d'image combinées.

8. Procédé de commande de l'appareil d'imagerie selon la revendication 6, comprenant en outre les étapes consistant à :
détecter une face à partir des données d'image, et
détecter une position d'un objectif du système optique d'imagerie,
dans lequel dans un cas où une face n'est pas détectée à l'étape de détection de la face à partir des données d'image, l'affichage de l'image de vue en direct est exécuté en conformité avec une position de l'objectif du système d'imagerie détectée à l'étape de détection de la position de l'objectif du système optique d'imagerie.

9. Procédé de commande de l'appareil d'imagerie selon la revendication 6 ou la revendication 8, dans lequel dans un cas où la position de l'objectif du système optique d'imagerie détectée à l'étape de détection de la position de l'objectif du système optique d'imagerie se trouve sur un côté de plus courte distance que dans une position prédéterminée, l'affichage de l'image de vue en direct dans le format d'affichage basé sur les données de signal de contour binarisées est exécuté.

10. Procédé de commande de l'appareil d'imagerie selon la revendication 6 ou la revendication 8, comprenant en outre une étape consistant à :
afficher un format d'affichage de l'image de vue en direct de sorte qu'un utilisateur puisse sélectionner soit le format d'affichage basé sur les données de signal de contour binarisées, soit le format d'affichage basé sur les données d'image combinées, dans lequel dans un cas où la position de l'objectif du système optique d'imagerie détectée à l'étape de détection de la position de l'objectif du système optique d'imagerie ne se trouve pas sur un côté de plus courte distance que dans une position prédéterminée, l'affichage de l'image de vue en direct est exécuté dans le format sélectionné par l'utilisateur.
